# EUROPÄISCHE PATENTSCHRIFT

(11) **EP 4 500 118 B1**
(45) Veröffentlichungstag und Bekanntmachung des Hinweises auf die Patenterteilung: **09.12.2026**
(21) Anmeldenummer: 23715085.9
(22) Anmeldetag: 24.03.2023
(51) Int. Cl.: G01F 11/00, B65B 3/04, B65B 3/12, B65B 59/04, B65B 39/12

(54) **DOSIERVORRICHTUNG ZU EINEM DOSIEREN VON FLÜSSIGEN ODER PASTÖSEN PRODUKTEN, SOWIE PRODUKTIONSMASCHINE MIT EINER DERARTIGEN DOSIERVORRICHTUNG**
DOSING DEVICE FOR DOSING LIQUID OR PASTY PRODUCTS, AND PRODUCTION MACHINE WITH SUCH A DOSING DEVICE
DISPOSITIF DE DOSAGE POUR DOSER DES PRODUITS LIQUIDES OU PÂTEUX, ET MACHINE DE PRODUCTION DOTÉE D'UN TEL DISPOSITIF DE DOSAGE

(30) Priorität: 25.03.2022 DE 102022107114
(43) Veröffentlichungstag der Anmeldung: 05.02.2025
(73) Patentinhaber: Ampack GmbH, 86343 Königsbrunn (DE)
(72) Erfinder: MÜLLER, Detlef, 74523 Schwäbisch Hall (DE); FETSCH, Anna, 86343 Königsbrunn (DE); HAAK, Jürgen, 72820 Sonnenbuehl (DE); ROHRER, Andreas, 86853 Langerringen (DE)
(74) Vertreter: Daub, Thomas
(86) Internationale Anmeldenummer: PCT/EP2023/057671
(87) Internationale Veröffentlichungsnummer: WO 2023/180542

(56) Entgegenhaltungen:
- EP-A2- 0 897 864
- EP-B1- 1 494 921
- DE-A1- 102016 201 313
- DE-C1- 3 919 662

## Beschreibung

### Stand der Technik

Die Erfindung betrifft eine Dosiervorrichtung zu einem Dosieren von flüssigen oder pastösen Produkten, insbesondere Lebensmitteln, mit zumindest einer Gestelleinheit und mit einer Vielzahl an Pumpeneinheiten zu einer Förderung der flüssigen oder pastösen Produkte, wobei die Pumpeneinheiten an einem, insbesondere plattenförmigen, Grundelement, insbesondere an einer Formatplatte, der Gestelleinheit angeordnet sind, insbesondere daran fixiert sind.

Derartige Dosiervorrichtungen sind bereits bekannt, wobei bei den bereits bekannten Dosiervorrichtungen eine Abstützung von Betriebskräften und Drehmomenten im Bereich der Pumpeneinheiten über das Grundelement erfolgt, so dass eine Bewegung der Pumpeneinheiten relativ zueinander infolge von Betriebskräften und Drehmomenten erfolgen kann. Dies kann zu einem hohen Verschleiß an den Pumpeneinheiten führen und zu einem frühzeitigen Ausfall der Pumpeneinheiten.

Ferner ist aus DE 22 27 069 A bereits eine Dosiervorrichtung zu einem Dosieren von flüssigen oder pastösen Produkten, mit zumindest einer Gestelleinheit und mit einer Vielzahl an Pumpeneinheiten zu einer Förderung der flüssigen oder pastösen Produkte bekannt, wobei die Pumpeneinheiten an einem Grundelement der Gestelleinheit angeordnet sind. Die bereits aus der DE 22 27 069 A bekannte Dosiervorrichtung weist zumindest eine Versteifungseinheit auf, die zumindest ein Versteifungselement umfasst, das die Pumpeneinheiten zumindest im Wesentlichen starr miteinander verbindet.

Des Weiteren ist aus GB 2 287 702 A bereits eine Dosiervorrichtung bekannt, bei der eine einzelne Pumpeneinheit zu einer Förderung von flüssigen oder pastösen Produkten genutzt wird.

Ferner ist aus EP 1 494 921 B1 bereits eine Dosiervorrichtung zu einem Dosieren von flüssigen oder pastösen Produkten, mit zumindest einer Gestelleinheit und mit einer Vielzahl an Pumpeneinheiten zu einer Förderung der flüssigen oder pastösen Produkte bekannt.

Die Aufgabe der Erfindung besteht insbesondere darin, eine gattungsgemäße Dosiervorrichtung und eine gattungsgemäße Produktionsmaschine mit verbesserten Eigenschaften hinsichtlich einer Stabilität, insbesondere hinsichtlich einer Biegesteifigkeit im Bereich eines die Pumpeneinheiten umfassenden Pumpenblocks, bereitzustellen. Die Aufgabe wird erfindungsgemäß durch die Merkmale des Anspruchs 1 bzw. des Anspruchs 9 gelöst, während vorteilhafte Ausgestaltungen und Weiterbildungen der Erfindung den Unteransprüchen entnommen werden können.

### Offenbarung der Erfindung

Die Erfindung geht aus von einer Dosiervorrichtung zu einem Dosieren von flüssigen oder pastösen Produkten, insbesondere Lebensmitteln, mit zumindest einer Gestelleinheit, mit einer Vielzahl an Pumpeneinheiten zu einer Förderung der flüssigen oder pastösen Produkte, wobei die Pumpeneinheiten an einem, insbesondere plattenförmigen, Grundelement, insbesondere an einer Formatplatte, der Gestelleinheit angeordnet sind, insbesondere daran fixiert sind, und mit zumindest einer Versteifungseinheit, die zumindest ein zumindest eine Fluidleitung aufweisendes Versteifungselement umfasst, das die Pumpeneinheiten zumindest im Wesentlichen starr miteinander verbindet, wobei das Versteifungselement auf einer dem Grundelement und/oder Pumpenaustragsdüsen der Pumpeneinheiten abgewandten Seite der Pumpeneinheiten an den Pumpeneinheiten angeordnet ist.

Es wird vorgeschlagen, dass das Versteifungselement zumindest die Fluidleitung umfasst, die zu einem Führen, insbesondere Ableiten, eines zu einer CIP-Reinigung (Clean-In-Place-Reinigung) der Pumpeneinheiten vorgesehenen CIP-Reinigungsmediums vorgesehen ist. Mittels der erfindungsgemäßen Ausgestaltung kann konstruktiv einfach eine Zusatzfunktion in das Versteifungselement und/oder in ein weiteres Versteifungselement der Versteifungseinheit integriert werden. Es kann vorteilhaft eine hohe Stabilität, insbesondere hinsichtlich einer Biegesteifigkeit im Bereich eines die Pumpeneinheiten umfassenden Pumpenblocks der Dosiervorrichtung, mit einer zusätzlichen funktionalen Ausgestaltung des die Pumpeneinheiten umfassenden Pumpenblocks realisiert werden. Es kann vorteilhaft eine besonders steife Ausgestaltung des die Pumpeneinheiten umfassenden Pumpenblocks erreicht werden. Es kann konstruktiv einfach ein vorteilhafter Kraftfluss innerhalb des die Pumpeneinheiten umfassenden Pumpenblocks erreicht werden. Es kann vorteilhaft eine lange Standzeit des die Pumpeneinheiten umfassenden Pumpenblocks erreicht werden, insbesondere da unerwünschten Bewegungen der Pumpeneinheiten relativ zueinander vorteilhaft entgegengewirkt werden kann. Es kann vorteilhaft eine als Ganzes austauschbare Pumpenbaugruppe, insbesondere des Pumpenblocks, realisiert werden. Es kann vorteilhaft eine Umrüstung der Dosiervorrichtung mit einer alternativen Pumpenbaugruppe ermöglicht werden, insbesondere um eine einfache Anpassbarkeit der Dosiervorrichtung an gewünschte Betriebsvoraussetzungen, wie beispielsweise an größere Fördervolumen, an unterschiedliche Hygieneklassen (Clean, Ultraclean und Aseptik) o. dgl., zu ermöglichen.

Bevorzugt umfasst die Dosiervorrichtung zumindest zwei Pumpeneinheiten zu einer Förderung der flüssigen oder pastösen Produkte. Besonders bevorzugt umfasst die Dosiervorrichtung ein ganzzahliges Vielfaches von zwei Pumpeneinheiten zu einer Förderung der flüssigen oder pastösen Produkte, wie beispielsweise vier Pumpeneinheiten, sechs Pumpeneinheiten, acht Pumpeneinheiten, zehn Pumpeneinheiten, zwölf Pumpeneinheiten o. dgl. Es ist jedoch auch denkbar, dass die Dosiervorrichtung eine ungerade Anzahl an Pumpeneinheiten umfasst, wie beispielsweise drei Pumpeneinheiten, fünf Pumpeneinheiten, sieben Pumpeneinheiten, neun Pumpeneinheiten, elf Pumpeneinheiten o. dgl. Die Pumpeneinheiten sind vorzugsweise einzeln über, insbesondere individuelle, Zuführleitungen der Dosiervorrichtung mit einer Tankeinheit der Dosiervorrichtung verbunden. Die Tankeinheit umfasst insbesondere zumindest ein Tankelement, in dem die oder das flüssige/n oder pastöse/n Produkt/e anordenbar sind. Denkbar ist auch, dass die Tankeinheit eine Vielzahl an Tankelementen umfasst, wobei in den einzelnen Tankelementen unterschiedliche Produkte anordenbar sind, die mittels der Pumpeneinheiten in Behälter förderbar sind, um insbesondere eine so genannte sortierte Abfüllung (ABAB oder ABCD) zu ermöglichen. Alternativ oder zusätzlich ist auch für mehrschichtige Produkte oder Produkte mit unterschiedlichen Bestandteilen eine Vielzahl an Tankelementen und/oder eine Hintereinanderschaltung von mehreren Dosiervorrichtungen denkbar, um beispielsweise einen Pudding mit Sahnehaube, der in einem Becher abgefüllt ist o. dgl. zu ermöglichen. Es ist auch denkbar, dass jeder Pumpeneinheit ein einzelnes Tankelement der Tankeinheit zugeordnet ist. Weitere, einem Fachmann als sinnvoll erscheinende Ausgestaltungen und/oder Aufteilungen der Tankeinheit und der Pumpeneinheiten sind ebenfalls denkbar.

Die Pumpeneinheiten sind vorzugsweise mittels einer form- und/oder kraftschlüssigen Verbindung, wie beispielsweise mittels einer Schraubverbindung, einer Klemmverbindung, einer Rastverbindung o. dgl., an dem Grundelement fixiert, insbesondere einzeln an dem Grundelement fixiert. Die Pumpeneinheiten sind bevorzugt einzeln von dem Grundelement demontierbar, insbesondere nach einer Demontage des Versteifungselements von den Pumpeneinheiten. Das Grundelement ist vorzugsweise biegesteif ausgebildet. Das Grundelement weist vorzugsweise eine maximale Stärke von mehr als 10 mm, bevorzugt von mehr als 20 mm und ganz besonders bevorzugt von mehr als 25 mm auf. Insbesondere weist das Grundelement eine maximale Stärke mit einem Wert aus einem Wertebereich von 20 mm bis 50 mm auf. Das Grundelement ist bevorzugt als, insbesondere ebene, Formatplatte ausgebildet. Bevorzugt umfasst das Grundelement zumindest einen Durchbruch zu einer Durchführung von Pumpenaustragsdüsen der Pumpeneinheiten. Das Grundelement kann eine Vielzahl an Einzeldurchbrüchen aufweisen, wobei jedem Einzeldurchbruch eine einzelne Pumpenaustragsdüse zugeordnet ist, oder das Grundelement kann einen, insbesondere zentralen, Durchbruch aufweisen, dem mehrere, insbesondere alle, Pumpenaustragsdüsen der Pumpeneinheiten zugeordnet sind, insbesondere durch den sich alle Pumpenaustragsdüsen der Pumpeneinheiten hindurch erstrecken. Das Grundelement ist vorzugsweise an einer den Pumpenaustragsdüsen der Pumpeneinheiten zugewandten Seite der Pumpeneinheiten an den Pumpeneinheiten angeordnet, insbesondere daran fixiert. Vorzugsweise ist der Durchbruch des Grundelements oder die Einzeldurchbrüche des Grundelements durch eine Fixierung der Pumpeneinheiten an dem Grundelement durch die Pumpeneinheit/en überdeckbar. Weitere, einem Fachmann als sinnvoll erscheinende Ausgestaltungen und/oder Anordnungen des Grundelements sind ebenfalls denkbar.

Das Versteifungselement kann als Versteifungsbalken, als Versteifungsplatte, als Versteifungsrohr, als Versteifungsbolzen, als Versteifungsstab oder als ein anderes, einem Fachmann als sinnvoll erscheinendes Bauteil ausgebildet sein, das die Pumpeneinheiten zumindest im Wesentlichen starr miteinander verbindet. Unter "im Wesentlichen starr miteinander verbunden" soll insbesondere eine Verbindung von zumindest zwei Elementen oder Einheiten, insbesondere der Pumpeneinheiten, verstanden werden, wobei die Elemente oder Einheiten, insbesondere die Pumpeneinheiten, vorzugsweise bis auf elastische Verformungsmöglichkeiten, wie beispielsweise durch Wärmeausdehnungen bedingte elastische Verformungen o. dgl., frei von Bewegungen relativ zueinander miteinander verbunden sind. Vorzugsweise sind die Pumpeneinheiten mittels des Versteifungselements zumindest im Wesentlichen bewegungsfrei miteinander verbunden. Die Pumpeneinheiten sind vorzugsweise bis auf elastische Verformungen von beispielsweise einem Gehäuse der Pumpeneinheiten o. dgl. und bis auf funktionsbedingte Bewegungen von inneren Bauteilen der Pumpeneinheiten, wie beispielsweise von Kolben, von Ventilen, von Membranen o. dgl., frei von Relativbewegungen mittels des zumindest einen Versteifungselements miteinander verbunden.

Vorzugsweise ist das Versteifungselement auf einer dem Grundelement und/oder den Pumpenaustragsdüsen abgewandten Seite der Pumpeneinheiten an den Pumpeneinheiten angeordnet. Es ist jedoch auch denkbar, dass das Versteifungselement alternativ oder zusätzlich, insbesondere räumlich, zwischen den Pumpeneinheiten oder seitlich an den Pumpeneinheiten angeordnet ist. Es ist beispielsweise denkbar, dass das Versteifungselement als Zwischenplatte ausgebildet ist, die zwischen zumindest zwei Pumpeneinheiten angeordnet ist und die Pumpeneinheiten zumindest im Wesentlichen starr miteinander verbindet. Das Versteifungselement kann eine, insbesondere integrierte, Fluidleitung zu einer Ab- oder Zuführung eines Fluids zu den Pumpeneinheiten aufweisen. Bei einer Ausgestaltung des Versteifungselements mit einer Fluidleitung ist es denkbar, dass das Versteifungselement beispielsweise analog zu einer Anordnung eines Abgaskrümmers bei einem Verbrennungsmotor seitlich an den Pumpeneinheiten angeordnet ist und die Pumpeneinheiten zumindest im Wesentlichen starr miteinander verbindet. Es ist auch denkbar, dass sich das Versteifungselement, insbesondere an einem dem Grundelement abgewandten Ende der Pumpeneinheiten, entlang einer quer, insbesondere zumindest im Wesentlichen senkrecht, zu einer Antriebsachse der Pumpeneinheiten verlaufenden Richtung durch die Pumpeneinheiten, insbesondere durch Gehäuse der Pumpeneinheiten, hindurch erstreckt und die Pumpeneinheiten zumindest im Wesentlichen starr miteinander verbindet. Bei einer Erstreckung des Versteifungselements durch die Pumpeneinheiten hindurch ist es denkbar, dass an dem, insbesondere als Gewindestange, als Stab, als Stange o. dgl. ausgebildeten, Versteifungselement zumindest ein Zwischenstück oder mehrere Zwischenstücke der Versteifungseinheit angeordnet ist/sind, das/die zu einer Überbrückung von möglichen Abständen zwischen den Pumpeneinheiten vorgesehen sind. Beispielsweise kann/können das/die Zwischenstück/e als Unterlegscheiben, als Zwischenblech, als Zwischenplatte o. dgl. ausgebildet sein. Denkbar ist auch, dass das Versteifungselement einteilig mit den Pumpeneinheiten ausgebildet ist, insbesondere einen Teil von zwei Pumpengehäusen der zumindest zwei miteinander verbundenen Pumpeneinheiten bildet. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling oder mittels eines additiven Fertigungsverfahrens, wie beispielsweise 3D-Druck o. dgl.

Das Versteifungselement umfasst, insbesondere in zumindest einem Ausführungsbeispiel der erfindungsgemäßen Dosiervorrichtung, eine maximale Stärke, insbesondere eine maximale Höhe, von insbesondere mehr als 30 mm, bevorzugt von mehr als 40 mm und besonders bevorzugt von mehr als 50 mm. Insbesondere weist das Versteifungselement eine maximale Stärke, insbesondere eine maximale Höhe, mit einem Wert aus einem Wertebereich von 40 mm bis 80 mm auf. Das Versteifungselement ist bevorzugt mittels einer form-, kraft- und/oder stoffschlüssigen Verbindung mit den Pumpeneinheiten verbunden. Vorzugsweise ist das Versteifungselement zerstörungsfrei mit den Pumpeneinheiten verbunden, insbesondere an den Pumpeneinheiten fixiert, wie beispielsweise mittels einer Schraubverbindung o. dgl. Die Versteifungseinheit kann ein einzelnes Versteifungselement umfassen, mittels dessen die Pumpeneinheiten zumindest im Wesentlichen starr miteinander verbunden sind, oder die Versteifungseinheit kann eine Vielzahl an Versteifungselementen umfassen, mittels denen die Pumpeneinheiten zumindest im Wesentlichen starr miteinander verbunden sind. Weitere, einem Fachmann als sinnvoll erscheinende Ausgestaltungen und/oder Anordnungen des Versteifungselements oder der Versteifungselemente sind ebenfalls denkbar.

Bevorzugt ist die Fluidleitung in das Versteifungselement integriert. Die Fluidleitung ist vorzugsweise als innerer Kanal im Versteifungselement ausgebildet. Die Fluidleitung ist bevorzugt fluidtechnisch mit einer Spülöffnung der Pumpeneinheiten verbunden, insbesondere in einem an den Pumpeneinheiten angeordneten Zustand des Versteifungselements. Das Versteifungselement bildet vorzugsweise einen CIP-Balken (Clean-In-Place-Balken). Das weitere Versteifungselement umfasst bevorzugt eine integrierte Fluidleitung. Die Fluidleitung des weiteren Versteifungselements ist analog zur Fluidleitung des Versteifungselements ausgebildet. Das weitere Versteifungselement bildet vorzugsweise einen weiteren CIP-Balken (Clean-In-Place-Balken).

Des Weiteren wird vorgeschlagen, dass die Pumpeneinheiten jeweils mit einem Ende am Grundelement fixiert sind und mit einem weiteren Ende am Versteifungselement fixiert sind. Die Pumpeneinheiten sind vorzugsweise räumlich zwischen dem Grundelement und dem Versteifungselement angeordnet, insbesondere betrachtet entlang einer sich zumindest im Wesentlichen senkrecht zu einer Haupterstreckungsebene des Grundelements verlaufenden Richtung. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Das Versteifungselement kann sich bei der Anordnung der Pumpeneinheit zwischen dem Grundelement und dem Versteifungselement abschnittsweise zwischen die Pumpeneinheiten hinein erstrecken. Beispielsweise ist denkbar, dass das Versteifungselement an der dem Grundelement abgewandten Seite der Pumpeneinheiten an den Pumpeneinheiten angeordnet ist, wobei sich ein Fortsatz oder mehrere Fortsätze des Versteifungselements zwischen zumindest zwei Pumpeneinheiten erstrecken und wobei die Pumpeneinheiten direkt an dem Fortsatz oder an den Fortsätzen anliegen oder daran fixiert sind. Vorzugsweise umfasst das Versteifungselement zumindest eine Verbindungsschnittstelle, die korrespondierend zu einer Verbindungsschnittstelle zumindest einer Pumpeneinheit der Vielzahl an Pumpeneinheiten ausgebildet ist, und zumindest eine weitere Verbindungsschnittstelle, die korrespondierend zu einer Verbindungsschnittstelle zumindest einer weiteren Pumpeneinheit der Vielzahl an Pumpeneinheiten ausgebildet ist, wobei die Verbindungsschnittstelle und die weitere Verbindungsschnittstelle des Versteifungselements identisch ausgebildet sind. Das Versteifungselement umfasst vorzugsweise eine Vielzahl an Verbindungsschnittstellen, die korrespondierend zu Verbindungsschnittstellen der Pumpeneinheiten ausgebildet ist. Eine Anzahl der Verbindungsschnittstellen des Versteifungselements entspricht vorzugsweise einer Anzahl an Pumpeneinheiten, an denen das Versteifungselement zu einer zumindest im Wesentlichen starren Verbindung der Pumpeneinheiten miteinander anordenbar ist. Mittels der erfindungsgemäßen Ausgestaltung kann vorteilhaft aus dem Grundelement, den Pumpeneinheiten und dem Versteifungselement eine Art Doppel-T-Träger/I-Träger zu einer Versteifung des die Pumpeneinheiten umfassenden Pumpenblocks realisiert werden. Es kann vorteilhaft eine hohe Stabilität, insbesondere hinsichtlich einer Biegesteifigkeit im Bereich des die Pumpeneinheiten umfassenden Pumpenblocks der Dosiervorrichtung, realisiert werden. Es kann vorteilhaft eine besonders steife Ausgestaltung des die Pumpeneinheiten umfassenden Pumpenblocks erreicht werden. Es kann konstruktiv einfach ein vorteilhafter Kraftfluss innerhalb des die Pumpeneinheiten umfassenden Pumpenblocks erreicht werden. Es kann vorteilhaft eine lange Standzeit des die Pumpeneinheiten umfassenden Pumpenblocks erreicht werden, insbesondere da unerwünschten Bewegungen der Pumpeneinheiten relativ zueinander vorteilhaft entgegengewirkt werden kann.

Ferner wird vorgeschlagen, dass das Versteifungselement eine Haupterstreckungsebene aufweist, die sich zumindest im Wesentlichen parallel zu einer, insbesondere der bereits zuvor genannten, Haupterstreckungsebene des Grundelements erstreckt. Unter einer "Haupterstreckungsebene" eines Elements oder einer Einheit soll insbesondere eine Ebene verstanden werden, welche parallel zu einer größten Seitenfläche eines kleinsten gedachten Quaders ist, welcher das Element oder die Einheit gerade noch vollständig umschließt, und insbesondere durch einen Mittelpunkt des Quaders verläuft. Bevorzugt verläuft die Haupterstreckungsebene des Versteifungselements in einem an den Pumpeneinheiten angeordneten Zustand des Versteifungselements zumindest im Wesentlichen parallel zur Haupterstreckungsebene des Grundelements, an dem die Pumpeneinheiten angeordnet sind. Vorzugsweise verläuft die Haupterstreckungsebene des Grundelements in einem einsatzbereiten Zustand, insbesondere in einem montierten Zustand der Dosiervorrichtung in einer die Dosiervorrichtung umfassenden Produktionsmaschine, zumindest im Wesentlichen parallel zu einer Horizontalebene und/oder zumindest im Wesentlichen parallel zu einer Standfläche eines Standfußes oder eines Rahmens der Produktionsmaschine. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Bevorzugt ist das Versteifungselement an Flächen der Pumpeneinheiten angeordnet, die zumindest im Wesentlichen parallel zur Haupterstreckungsebene des Grundelements verlaufen. Die Flächen der Pumpeneinheiten, an denen das Versteifungselement an den Pumpeneinheiten angeordnet, insbesondere fixiert, ist, sind vorzugsweise an Seiten der Pumpeneinheiten angeordnet, die in einem am Grundelement angeordneten Zustand der Pumpeneinheiten dem Grundelement abgewandt sind. Das Versteifungselement weist hinsichtlich einer mechanischen Versteifungsfunktion vorzugsweise eine zu einem Oberflansch bei einem Doppel-T-Träger/I-Träger vergleichbare Funktion auf. Das Grundelement weist hinsichtlich einer mechanischen Versteifungsfunktion bevorzugt eine zu einem Unterflansch bei einem Doppel-T-Träger/I-Träger vergleichbare Funktion auf. Mittels der erfindungsgemäßen Ausgestaltung kann vorteilhaft eine hohe Stabilität, insbesondere hinsichtlich einer Biegesteifigkeit im Bereich des die Pumpeneinheiten umfassenden Pumpenblocks der Dosiervorrichtung, realisiert werden. Es kann vorteilhaft eine besonders steife Ausgestaltung des die Pumpeneinheiten umfassenden Pumpenblocks erreicht werden. Es kann konstruktiv einfach ein vorteilhafter Kraftfluss innerhalb des die Pumpeneinheiten umfassenden Pumpenblocks erreicht werden.

Des Weiteren wird vorgeschlagen, dass sich das Versteifungselement, betrachtet entlang einer zumindest im Wesentlichen parallel zu einer, insbesondere der bereits zuvor genannten, Haupterstreckungsebene des Grundelements verlaufenden Richtung, zumindest über zwei Pumpeneinheiten, insbesondere über alle Pumpeneinheiten, der Vielzahl der Pumpeneinheiten erstreckt und an diesen, insbesondere direkt, anliegt. Das Versteifungselement erstreckt sich entlang der zumindest im Wesentlichen parallel zur Haupterstreckungsebene des Grundelements verlaufenden Richtung vorzugsweise vollständig über die zwei Pumpeneinheiten, insbesondere über alle Pumpeneinheiten, der Vielzahl der Pumpeneinheiten. Eine maximale Gesamtlänge des Versteifungselements, betrachtet entlang der zumindest im Wesentlichen parallel zur Haupterstreckungsebene des Grundelements verlaufenden Richtung, entspricht bevorzugt einer maximalen Erstreckung der zwei Pumpeneinheiten, insbesondere aller Pumpeneinheiten, der Vielzahl der Pumpeneinheiten entlang der zumindest im Wesentlichen parallel zur Haupterstreckungsebene des Grundelements verlaufenden Richtung, insbesondere zuzüglich eines Abstands zwischen den einzelnen Pumpeneinheiten. Es ist jedoch auch denkbar, dass die maximale Gesamtlänge des Versteifungselements einen anderen, einem Fachmann als sinnvoll erscheinenden Wert aufweist, wie beispielsweise insbesondere weniger als 90 % und bevorzugt weniger als 70 % der maximalen Erstreckung der zwei Pumpeneinheiten, insbesondere aller Pumpeneinheiten, der Vielzahl der Pumpeneinheiten entlang der zumindest im Wesentlichen parallel zur Haupterstreckungsebene des Grundelements verlaufenden Richtung. Besonders bevorzugt erstreckt sich das Versteifungselement, betrachtet entlang der zumindest im Wesentlichen parallel zur Haupterstreckungsebene des Grundelements verlaufenden Richtung, ausgehend von einer randseitigen Pumpeneinheit zumindest bis zu einer weiteren randseitigen Pumpeneinheit der Vielzahl an Pumpeneinheiten. Beispielsweise erstreckt sich das Versteifungselement bei insgesamt zwei Pumpeneinheiten von der einen der Pumpeneinheiten zur anderen der Pumpeneinheiten, bei insgesamt vier Pumpeneinheiten erstreckt sich das Versteifungselement von einer randseitigen Pumpeneinheit bis zu einer weiteren randseitigen Pumpeneinheit über zwei zwischen den randseitigen Pumpeneinheiten usw. Vorzugsweise sind die Pumpeneinheiten, insbesondere fluchtend zueinander, in einer Reihe am Grundelement angeordnet, wobei sich das Versteifungselement über die Reihe erstreckt. Es ist jedoch auch denkbar, dass die Pumpeneinheiten eine andere, einem Fachmann als sinnvoll erscheinende Anordnung am Grundelement aufweisen, wie beispielsweise eine zickzackartige Anordnung, eine bogenförmige Anordnung, eine kreisförmige Anordnung, eine polygonale Anordnung o. dgl. Die Pumpeneinheiten, insbesondere direkt benachbarte Pumpeneinheiten, weisen bevorzugt in einem am Grundelement angeordneten Zustand entlang der zumindest im Wesentlichen parallel zur Haupterstreckungsebene des Grundelements verlaufenden Richtung einen Abstand zueinander auf. Der Abstand der Pumpeneinheiten, insbesondere der direkt benachbarten Pumpeneinheiten, weist einen maximalen Wert auf, der insbesondere kleiner ist als 40 mm, bevorzugt kleiner ist als 30 mm und ganz besonders bevorzugt kleiner ist als 20 mm. Besonders bevorzugt weist der Abstand zwischen den direkt benachbarten Pumpeneinheiten einen maximalen Wert aus einem Wertebereich von 15 mm bis 18 mm auf. Bevorzugt ist der Abstand zwischen allen direkt benachbarten Pumpeneinheiten in Bezug auf einen Wert identisch, insbesondere bis auf Toleranzunterschiede. Mittels der erfindungsgemäßen Ausgestaltung kann vorteilhaft eine konstruktiv einfache Verbindung der Pumpeneinheiten erreicht werden, um eine zumindest im Wesentlichen starre Verbindung zu realisieren. Es kann vorteilhaft eine hohe Stabilität, insbesondere hinsichtlich einer Biegesteifigkeit im Bereich des die Pumpeneinheiten umfassenden Pumpenblocks der Dosiervorrichtung, realisiert werden. Es kann vorteilhaft eine besonders steife Ausgestaltung des die Pumpeneinheiten umfassenden Pumpenblocks erreicht werden. Es kann konstruktiv einfach ein vorteilhafter Kraftfluss innerhalb des die Pumpeneinheiten umfassenden Pumpenblocks erreicht werden. Es kann vorteilhaft eine lange Standzeit des die Pumpeneinheiten umfassenden Pumpenblocks erreicht werden, insbesondere da unerwünschten Bewegungen der Pumpeneinheiten relativ zueinander vorteilhaft entgegengewirkt werden kann.

Weiterhin wird vorgeschlagen, dass die Versteifungseinheit zumindest ein, insbesondere zumindest eine Fluidleitung aufweisendes, weiteres Versteifungselement, vorzugsweise das bereits zuvor genannte weitere Versteifungselement, umfasst, das die Pumpeneinheiten zumindest im Wesentlichen starr miteinander verbindet. Das weitere Versteifungselement weist vorzugsweise eine zumindest im Wesentlichen analoge Ausgestaltung zum Versteifungselement auf, insbesondere eine identische Ausgestaltung. Insbesondere gilt eine Beschreibung des Versteifungselements analog auch für das weitere Versteifungselement. Es ist jedoch auch denkbar, dass das weitere Versteifungselement im Vergleich zum Versteifungselement eine verschiedenartige Ausgestaltung aufweist, insbesondere in Bezug auf Zusatzfunktionen des weiteren Versteifungselements, wie beispielsweise eine Fluidleitung, einen Wärmetransport o. dgl. Vorzugsweise sind/ist das Versteifungselement und/oder das weitere Versteifungselement aus einem metallischen Werkstoff gebildet. Es ist jedoch auch denkbar, dass das Versteifungselement und/oder das weitere Versteifungselement aus einem anderen, einem Fachmann als sinnvoll erscheinenden Werkstoff gebildet sind/ist, wie beispielsweise aus einem Kunststoff, aus einem Verbundwerkstoff o. dgl. Das Versteifungselement und das weitere Versteifungselement können, insbesondere zusätzlich zu einer Verbindung über die Pumpeneinheiten, miteinander verbunden sein, wie beispielsweise mittels einer form- und/oder kraftschlüssigen Verbindung. Vorzugsweise sind das Versteifungselement und das weitere Versteifungselement getrennt voneinander ausgebildete Bauteile, die einzeln an den Pumpeneinheiten anordenbar sind, insbesondere angeordnet werden. Mittels der erfindungsgemäßen Ausgestaltung können vorteilhaft große Toleranzbereiche bei einer Fertigung der Versteifungseinheit gewählt werden und dennoch kann vorteilhaft eine hohe Stabilität ermöglicht werden. Es kann vorteilhaft eine konstruktiv einfache Verbindung der Pumpeneinheiten erreicht werden, um eine zumindest im Wesentlichen starre Verbindung zu realisieren. Es kann vorteilhaft eine besonders steife Ausgestaltung des die Pumpeneinheiten umfassenden Pumpenblocks erreicht werden.

Des Weiteren wird vorgeschlagen, dass die Pumpeneinheiten zusammen mit dem Versteifungselement und mit dem Grundelement als Ganzes modular austauschbar ausgebildet sind. Vorzugsweise bilden die Pumpeneinheiten zusammen mit dem Versteifungselement und mit dem Grundelement in einem aneinander fixierten Zustand ein Baugruppenmodul, das bevorzugt als Ganzes von anderen Bauteilen und Einheiten lösbar ist und austauschbar ist, beispielsweise bei einem Defekt der Pumpeneinheiten, bei einer Änderung eines maximalen Fördervolumens oder bei einer Änderung einer anderen Anforderung an die Pumpeneinheiten. Bevorzugt bilden die Pumpeneinheiten zusammen mit dem Versteifungselement und mit dem Grundelement ein Montagemodul. Unter einem "Montagemodul" soll insbesondere ein Modul mit mehreren Bauteilen verstanden werden, die dazu vorgesehen sind, zu einer Einheit vormontiert zu werden, die dann als Ganzes in einer weiteren Einheit montiert wird. Mittels der erfindungsgemäßen Ausgestaltung kann vorteilhaft eine Modularität zumindest im Bereich des die Pumpeneinheiten umfassenden Pumpenblocks erreicht werden. Infolge des Versteifungselements kann auch während einer Entnahme des Pumpenblocks von der restlichen Dosiervorrichtung eine hohe Stabilität erreicht werden, insbesondere um unerwünschten Verformungen des Pumpenblocks während einer Demontage von der Dosiervorrichtung entgegenzuwirken. Es kann vorteilhaft in Abhängigkeit von einem Kundenwunsch der gewünschte biegesteife Pumpenblock einfach und schnell ausgetauscht werden. Es kann vorteilhaft eine hohe Stabilität, insbesondere hinsichtlich einer Biegesteifigkeit im Bereich des die Pumpeneinheiten umfassenden Pumpenblocks der Dosiervorrichtung, realisiert werden. Es kann vorteilhaft eine besonders steife Ausgestaltung des die Pumpeneinheiten umfassenden Pumpenblocks erreicht werden. Es kann vorteilhaft eine als Ganzes austauschbare Pumpenbaugruppe, insbesondere des Pumpenblocks, realisiert werden. Es kann vorteilhaft eine Umrüstung der Dosiervorrichtung mit einer alternativen Pumpenbaugruppe ermöglicht werden, insbesondere um eine einfache Anpassbarkeit der Dosiervorrichtung an gewünschte Betriebsvoraussetzungen, wie beispielsweise an größere Fördervolumen, an unterschiedliche Hygieneklassen (Clean, Ultraclean und Aseptik) o. dgl., zu ermöglichen. Zudem wird vorgeschlagen, dass die Dosiervorrichtung zumindest eine Antriebseinheit umfasst, die an einem Basisgestell der Gestelleinheit angeordnet ist, wobei das Basisgestell an dem Grundelement fixiert ist und die Pumpeneinheit zumindest an einem Ende, insbesondere an dem weiteren Ende, an dem das Versteifungselement an den Pumpeneinheiten angeordnet ist, starrverbindungsfrei zwischen zwei Seitenwandelementen des Basisgestells angeordnet ist. Vorzugsweise sind die Pumpeneinheiten an den weiteren Enden frei von einer direkten Verbindung mit den Seitenwandelementen. Bevorzugt sind/ist das Versteifungselement und/oder das weitere Versteifungselement starrverbindungsfrei zwischen den zwei Seitenwandelementen des Basisgestells angeordnet, insbesondere betrachtet entlang der zumindest im Wesentlichen parallel zur Haupterstreckungsebene des Grundelements verlaufenden Richtung. Vorzugsweise sind/ist das Versteifungselement und/oder das weitere Versteifungselement frei von einer direkten Verbindung mit den Seitenwandelementen. Es ist denkbar, dass die Dosiervorrichtung zur Lösung der oben genannten Aufgabe in einer alternativen Ausgestaltung unabhängig von der Versteifungseinheit ausgebildet ist. Vorzugsweise umfasst die Dosiervorrichtung in der alternativen Ausgestaltung, insbesondere in der unabhängig von der Versteifungseinheit ausgebildeten Ausgestaltung, zu einem Dosieren von flüssigen oder pastösen Produkten, insbesondere Lebensmitteln, zumindest eine Gestelleinheit, eine Vielzahl an Pumpeneinheiten zu einer Förderung der flüssigen oder pastösen Produkte, wobei die Pumpeneinheiten an einem, insbesondere plattenförmigen, Grundelement, insbesondere an einer Formatplatte, der Gestelleinheit angeordnet sind, insbesondere daran fixiert sind, und zumindest eine Antriebseinheit, die an einem Basisgestell der Gestelleinheit angeordnet ist, wobei das Basisgestell an dem Grundelement fixiert ist und die Pumpeneinheit zumindest an einem Ende, insbesondere an dem weiteren Ende, an dem das Versteifungselement an den Pumpeneinheiten angeordnet ist, starrverbindungsfrei zwischen zwei Seitenwandelementen des Basisgestells angeordnet ist. Der Ausdruck "starrverbindungsfrei" soll insbesondere eine Anordnung von Bauteilen oder Einheiten relativ zueinander definieren, wobei die Bauteile oder Einheiten zumindest bereichsweise relativ zueinander beabstandet sind, insbesondere in zumindest einem Bereich ein Spalt zwischen den Bauteilen oder den Einheiten vorhanden ist. Vorzugsweise sind die Pumpeneinheiten zumindest mit dem weiteren Ende, das dem Ende der Pumpeneinheiten, an dem die Pumpeneinheiten am Grundelement fixiert sind, abgewandt ist, relativ zu den Seitenwandelementen beabstandet angeordnet, insbesondere betrachtet entlang der zumindest im Wesentlichen parallel zur Haupterstreckungsebene des Grundelements verlaufenden Richtung. Bevorzugt können die Pumpeneinheiten sich insbesondere zu einem Ausgleich von elastischen Verformungen, wie beispielsweise wärmebedingte elastische Verformungen o. dgl., zumindest im Bereich des weiteren Endes relativ zu den Seitenwandelementen bewegen, insbesondere betrachtet entlang der zumindest im Wesentlichen parallel zur Haupterstreckungsebene des Grundelements verlaufenden Richtung. Bevorzugt sind/ist das Versteifungselement und/oder das weitere Versteifungselement relativ zu den Seitenwandelementen beabstandet angeordnet, insbesondere betrachtet entlang der zumindest im Wesentlichen parallel zur Haupterstreckungsebene des Grundelements verlaufenden Richtung. Bevorzugt können/kann sich das Versteifungselement und/oder das weitere Versteifungselement, insbesondere zu einem Ausgleich von elastischen Verformungen, wie beispielsweise wärmebedingte elastische Verformungen o. dgl., zumindest im Bereich des weiteren Endes relativ zu den Seitenwandelementen bewegen, insbesondere betrachtet entlang der zumindest im Wesentlichen parallel zur Haupterstreckungsebene des Grundelements verlaufenden Richtung. Die Antriebseinheit umfasst vorzugsweise eine Vielzahl an Antrieben zu einem Antrieb der Pumpeneinheiten. Die Antriebe können als elektrische Antriebe, als hydraulische Antriebe, als pneumatische Antriebe, als mechanische Antriebe, wie beispielsweise Kurvenscheibenantriebe o. dgl., oder als sonstige, einem Fachmann als sinnvoll erscheinende Antriebe ausgebildet sein. Es ist denkbar, dass die Antriebseinheit je Pumpeneinheit einen Einzelantrieb aufweist oder dass die Antriebseinheit mehrere Pumpeneinheiten mit einem Antrieb antreibt, wobei die Pumpeneinheiten über eine Kupplung und/oder ein Getriebe antriebstechnisch mit dem Antrieb verbunden sind. Mittels der erfindungsgemäßen Ausgestaltung kann vorteilhaft eine steife Ausgestaltung des die Pumpeneinheiten umfassenden Pumpenblocks erreicht werden, wobei vorteilhaft eine elastische Verformung des die Pumpeneinheiten umfassenden Pumpenblocks im Bereich des Antriebsblocks erreicht werden kann, insbesondere um lange Standzeiten zu realisieren. Es kann eine besonders langlebige Dosiervorrichtung realisiert werden. Es kann vorteilhaft eine hohe Stabilität, insbesondere hinsichtlich einer Biegesteifigkeit im Bereich eines die Antriebseinheit umfassenden Antriebsblocks der Dosiervorrichtung, realisiert werden. Es kann vorteilhaft eine besonders steife Ausgestaltung des die Pumpeneinheiten umfassenden Pumpenblocks sowie des die Antriebseinheit umfassenden Antriebsblocks erreicht werden.

Des Weiteren wird vorgeschlagen, dass die Versteifungseinheit zumindest ein biegesteifes, insbesondere Doppel-T-Träger-förmiges, Antriebsversteifungselement umfasst, an dem die Antriebseinheit, insbesondere eine Vielzahl an Antrieben der Antriebseinheit, angeordnet ist, insbesondere fixiert ist, wobei das, insbesondere zumindest eine im Wesentlichen parallel zu einer Haupterstreckungsebene des Versteifungselements verlaufende Längsachse aufweisende, Antriebsversteifungselement mit den Seitenwandelementen zumindest im Wesentlichen starr verbunden ist. Die Antriebseinheit ist vorzugsweise mittels einer form- und/oder kraftschlüssigen Verbindung, wie beispielsweise mittels einer Schraubverbindung, einer Klemmverbindung, einer Rastverbindung o. dgl., an dem Antriebsversteifungselement fixiert. Das Antriebsversteifungselement ist vorzugsweise an einem dem Grundelement abgewandten Ende der Seitenwandelemente mit den Seitenwandelementen zumindest im Wesentlichen starr verbunden. Das Antriebsversteifungselement ist bevorzugt mittels einer form-, kraft- und/oder stoffschlüssigen Verbindung mit den Seitenwandelementen verbunden. Vorzugsweise ist das Antriebsversteifungselement zerstörungsfrei mit den Seitenwandelementen verbunden, insbesondere an den Seitenwandelementen fixiert, wie beispielsweise mittels einer Schraubverbindung o. dgl. Es ist auch denkbar, dass das Antriebsversteifungselement einteilig mit den Seitenwandelementen ausgebildet ist. Bevorzugt erstrecken sich die Seitenwandelemente quer, insbesondere zumindest im Wesentlichen senkrecht, zur Längsachse des Antriebsversteifungselements und/oder zur Haupterstreckungsebene des Grundelements. Mittels der erfindungsgemäßen Ausgestaltung kann vorteilhaft eine steife Ausgestaltung des die Antriebseinheit umfassenden Antriebsblocks erreicht werden. Es kann eine besonders langlebige Dosiervorrichtung realisiert werden. Es kann vorteilhaft eine hohe Stabilität, insbesondere hinsichtlich einer Biegesteifigkeit im Bereich des die Antriebseinheit umfassenden Antriebsblocks der Dosiervorrichtung, realisiert werden. Es kann vorteilhaft eine besonders steife Ausgestaltung des die Pumpeneinheiten umfassenden Pumpenblocks sowie des die Antriebseinheit umfassenden Antriebsblocks erreicht werden.

Ferner wird eine Produktionsmaschine mit zumindest einer erfindungsgemäßen Dosiervorrichtung vorgeschlagen. Die Produktionsmaschine kann weitere, einem Fachmann als sinnvoll erscheinende Vorrichtungen und/oder Einheiten umfassen, die zu einer Handhabung von Produkten, insbesondere von Lebensmitteln, nutzbar sind. Die Produktionsmaschine ist vorzugsweise zu einer Herstellung, Abfüllung, Verpackung und/oder Umverpackung von Lebensmitteln vorgesehen. Die Produktionsmaschine kann zusätzlich zur Dosiervorrichtung eine Vielzahl an weiteren Vorrichtungen und/oder Einheiten aufweisen, die ein Fachmann für sinnvoll erachtet, wie beispielsweise eine Umformvorrichtung für Verpackungen, eine Schneidvorrichtung, eine Abfüllvorrichtung, eine Sterilisationsvorrichtung, eine Verschlussvorrichtung, eine Umverpackungsvorrichtung, eine Behälterzuführvorrichtung o. dgl. Mittels der erfindungsgemäßen Ausgestaltung kann vorteilhaft eine Produktionsmaschine mit einer stabilen Dosiervorrichtung realisiert werden. Vorzugsweise kann eine komfortable Austauschbarkeit von einzelnen Einheiten oder Bauteilen, insbesondere von dem Pumpenblock und/oder von dem Antriebsblock, zu einer Funktionsänderung der Dosiervorrichtung erreicht werden.

Die erfindungsgemäße Dosiervorrichtung und/oder die erfindungsgemäße Produktionsmaschine sollen/soll hierbei nicht auf die oben beschriebene Anwendung und Ausführungsform beschränkt sein. Insbesondere können/kann die erfindungsgemäße Dosiervorrichtung und/oder die erfindungsgemäße Produktionsmaschine zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt.

### Es zeigen:

- Fig. 1: Eine erfindungsgemäße Produktionsmaschine mit zumindest einer erfindungsgemäßen Dosiervorrichtung in einer schematischen Darstellung,
- Fig. 2: eine Detailansicht der erfindungsgemäßen Dosiervorrichtung in einer schematischen Darstellung,
- Fig. 3: einen Pumpeneinheiten der erfindungsgemäßen Dosiervorrichtung umfassenden Pumpenblock der erfindungsgemäßen Dosiervorrichtung in einer schematischen Darstellung,
- Fig. 4: einen eine Antriebseinheit der erfindungsgemäßen Dosiervorrichtung umfassenden Antriebsblock der erfindungsgemäßen Dosiervorrichtung in einer schematischen Darstellung,
- Fig. 5: eine an den Pumpeneinheiten angeordnete Sterilfluidverteilereinheit der erfindungsgemäßen Dosiervorrichtung in einer schematischen Darstellung und
- Fig. 6: eine einer Gestelleinheit der erfindungsgemäßen Dosiervorrichtung anordenbare Hubeinheit der erfindungsgemäßen Dosiervorrichtung in einer schematischen Darstellung.

### Beschreibung des Ausführungsbeispiels

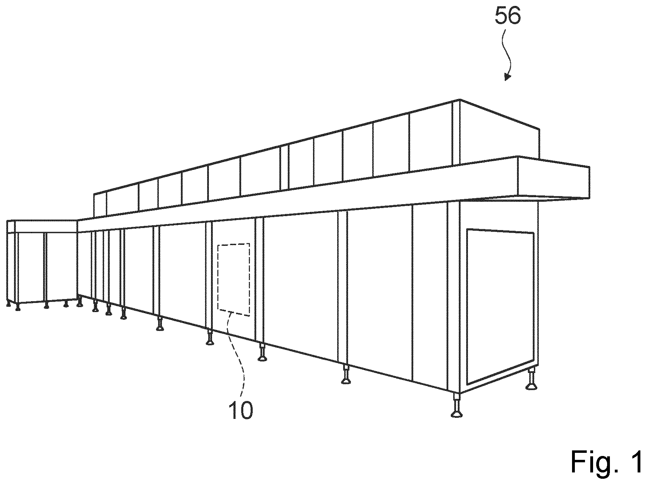

Figur 1 zeigt eine Produktionsmaschine 56 mit zumindest einer Dosiervorrichtung 10 zu einem Dosieren von flüssigen oder pastösen Produkten, insbesondere Lebensmitteln. Die Produktionsmaschine 56 ist bevorzugt zu einer Herstellung und/oder zu einer Verarbeitung von Produkten, insbesondere Lebensmitteln, vorgesehen. Die Produktionsmaschine 56 kann beispielsweise als eine Lebensmittelverpackungsmaschine, als eine Lebensmittelabfüllmaschine, als eine Lebensmittelherstellungsmaschine, als eine Kombination der zuvor genannten Maschinen o. dgl. ausgebildet sein. Die Produktionsmaschine 56 kann weitere, einem Fachmann als sinnvoll erscheinende Vorrichtungen und/oder Einheiten aufweisen, die zu einer Herstellung und/oder Verarbeitung von Produkten, insbesondere Lebensmitteln, Verwendung finden, wie beispielsweise eine Sterilisationsvorrichtung, eine Abfüllvorrichtung, eine Verschlussvorrichtung, eine Umverpackungsvorrichtung, eine Behälterzuführvorrichtung o. dgl.

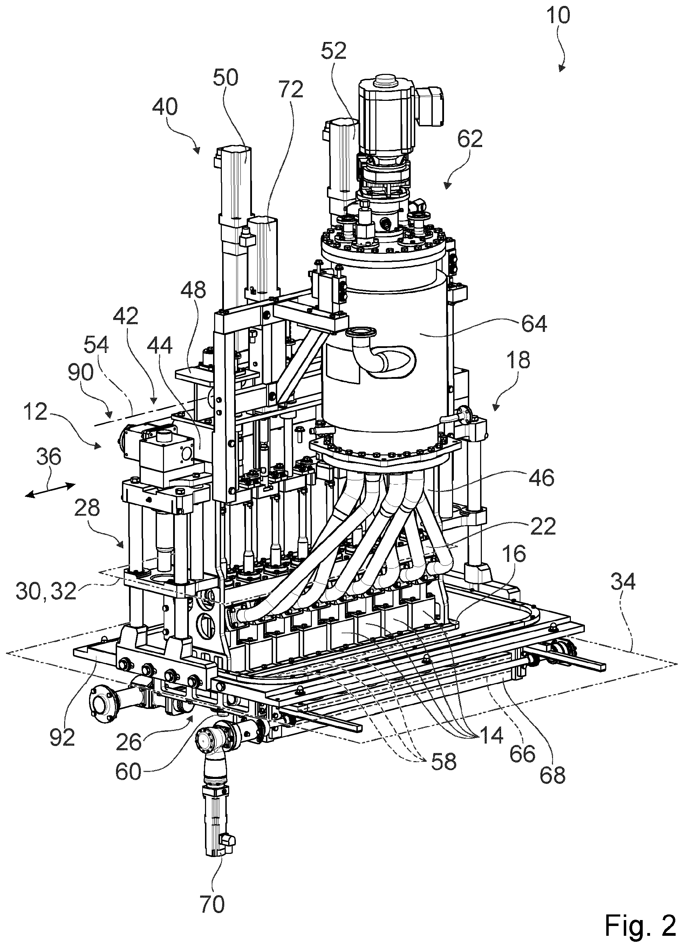

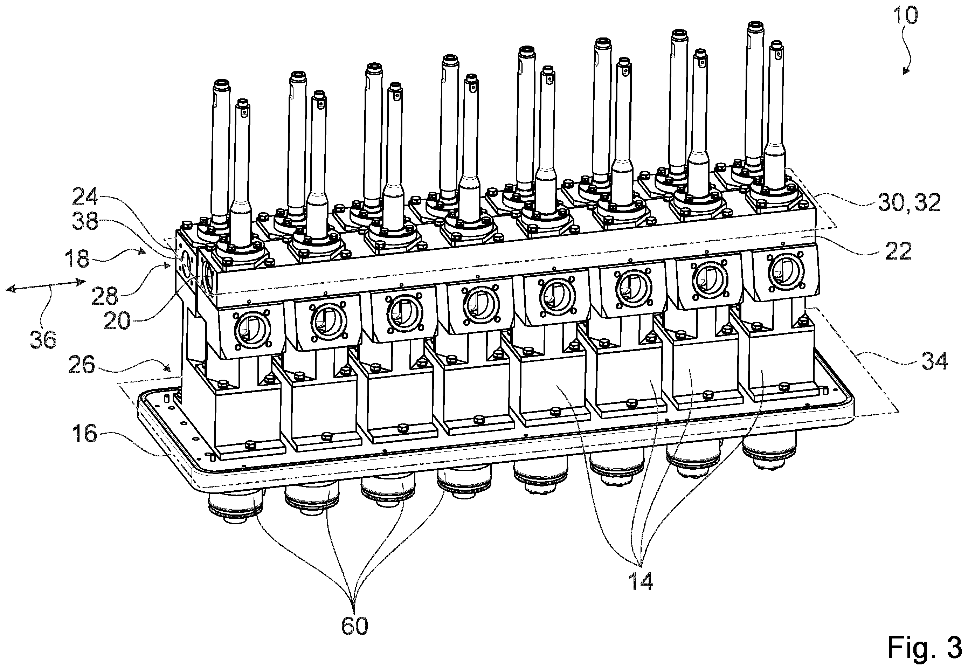

Figur 2 zeigt eine Detailansicht der Dosiervorrichtung 10 zu einem Dosieren von flüssigen oder pastösen Produkten, insbesondere Lebensmitteln, in Behälter (hier nicht näher dargestellt), insbesondere in becherförmige Behälter. Die Dosiervorrichtung 10 umfasst zumindest eine Gestelleinheit 12 und eine Vielzahl an Pumpeneinheiten 14 zu einer Förderung der flüssigen oder pastösen Produkte, wobei die Pumpeneinheiten 14 an einem, insbesondere plattenförmigen, Grundelement 16, insbesondere an einer Formatplatte, der Gestelleinheit 12 angeordnet sind, insbesondere daran fixiert sind (vgl. auch Figur 3). In dem hier beschriebenen Ausführungsbeispiel umfasst die Dosiervorrichtung 10 beispielhaft acht Pumpeneinheiten 14. Es ist jedoch auch denkbar, dass die Dosiervorrichtung 10 eine andere, einem Fachmann als sinnvoll erscheinende Anzahl an Pumpeneinheiten 14 umfasst, insbesondere eine für einen spezifischen Einsatzbereich der Dosiervorrichtung 10 sinnvolle Anzahl. Vorzugsweise sind die Pumpeneinheiten 14, insbesondere fluchtend zueinander, in einer Reihe am Grundelement 16 angeordnet (vgl. Figur 3). Die Pumpeneinheiten 14 sind vorzugsweise mittels einer form- und/oder kraftschlüssigen Verbindung, wie beispielsweise mittels einer Schraubverbindung, einer Klemmverbindung, einer Rastverbindung o. dgl., an dem Grundelement 16 fixiert, insbesondere einzeln an dem Grundelement 16 fixiert. Die Pumpeneinheiten 14 sind bevorzugt einzeln von dem Grundelement 16 demontierbar. Bevorzugt umfasst das Grundelement 16 zumindest einen Durchbruch 58 zu einer Durchführung von Pumpenaustragsdüsen 60 der Pumpeneinheiten 14 (vgl. Figur 3). Die Pumpenaustragsdüsen 60 der Pumpeneinheiten 14 sind vorzugsweise einzeln austauschbar an den Pumpeneinheiten 14 fixiert. Das Grundelement 16 weist in dem hier dargestellten Ausführungsbeispiel eine Vielzahl an Einzeldurchbrüchen 58 auf, wobei jedem Einzeldurchbruch 58 eine einzelne Pumpenaustragsdüse 60 einer einzelnen Pumpeneinheit 14 zugeordnet ist. Es ist jedoch auch denkbar, dass das Grundelement 16 einen, insbesondere zentralen, Durchbruch 58 aufweist, dem mehrere, insbesondere alle, Pumpenaustragsdüsen 60 der Pumpeneinheiten 14 zugeordnet sind, insbesondere durch den sich alle Pumpenaustragsdüsen 60 der Pumpeneinheiten 14 hindurch erstrecken. Die Pumpenaustragsdüsen 60 der Pumpeneinheiten 14 können alle eine identische Ausgestaltung aufweisen oder unterschiedlich ausgebildet sein. Vorzugsweise sind die Pumpenaustragsdüsen 60 einzeln austauschbar ausgebildet. Die Pumpenaustragsdüsen 60 können als Flachventildüse, als Schneckenschieberdüse, als Drehschieberdüse oder als eine andere, einem Fachmann als sinnvoll erscheinende Pumpenaustragsdüse 60 ausgebildet sein. Das Grundelement 16 ist vorzugsweise an einer den Pumpenaustragsdüsen 60 der Pumpeneinheiten 14 zugewandten Seite der Pumpeneinheiten 14 an den Pumpeneinheiten 14 angeordnet, insbesondere daran fixiert. Vorzugsweise sind die Einzeldurchbrüche 58 des Grundelements 16 durch eine Fixierung der Pumpeneinheiten 14 an dem Grundelement 16 durch die Pumpeneinheiten 14 überdeckt.

Die Dosiervorrichtung 10 umfasst vorzugsweise zumindest eine Tankeinheit 62, die zumindest ein Tankelement 64 aufweist, in dem die oder das flüssige/n oder pastöse/n Produkt/e anordenbar sind. An der Tankeinheit 62 ist bevorzugt auf eine, einem Fachmann bereits bekannte Art und Weise eine Mischereinheit angeordnet. Die Pumpeneinheiten 14 sind vorzugsweise einzeln über, insbesondere individuelle, Zuführleitungen der Dosiervorrichtung 10 mit dem Tankelement 64 verbunden. Denkbar ist auch, dass die Tankeinheit 62 eine Vielzahl an Tankelementen 64 umfasst, wobei in den einzelnen Tankelementen 64 unterschiedliche Produkte anordenbar sind, die mittels der Pumpeneinheiten 14 in Behälter förderbar sind, um mehrschichtige Produkte oder Produkte mit unterschiedlichen Bestandteilen zu ermöglichen, wie beispielsweise einen Pudding mit Sahnehaube, der in einem Becher abgefüllt ist o. dgl. Bei einer Ausgestaltung der Tankeinheit 62 mit einer Vielzahl an Tankelementen 64 ist bevorzugt jeder Pumpeneinheit 14 ein einzelnes Tankelement 64 der Tankeinheit 62 zugeordnet. Ferner ist auch denkbar, dass die Pumpeneinheit 14 individuell oder gemeinsam über ein Rohrleitungssystem der Produktionsmaschine 56 mit Produkten versorgbar ist und die Produkte in entfernten Silos o. dgl. gelagert sind. Weitere, einem Fachmann als sinnvoll erscheinende Ausgestaltungen und/oder Aufteilungen der Tankeinheit 62 und der Pumpeneinheiten 14 sind ebenfalls denkbar.

Die Dosiervorrichtung 10 weist zumindest eine Versteifungseinheit 18 auf, die zumindest ein, insbesondere zumindest eine Fluidleitung 20 aufweisendes, Versteifungselement 22 umfasst, das die Pumpeneinheiten 14 zumindest im Wesentlichen starr miteinander verbindet (vgl. Figuren 2 und 3). Vorzugsweise umfasst die Versteifungseinheit 18 zumindest ein, insbesondere zumindest eine Fluidleitung 38 aufweisendes, weiteres Versteifungselement 24, das die Pumpeneinheiten 14 zumindest im Wesentlichen starr miteinander verbindet. Das weitere Versteifungselement 24 weist vorzugsweise eine zumindest im Wesentlichen analoge Ausgestaltung zum Versteifungselement 22 auf, insbesondere eine identische Ausgestaltung. Insbesondere gilt eine Beschreibung des Versteifungselements 22 analog auch für das weitere Versteifungselement 24. Es ist jedoch auch denkbar, dass das weitere Versteifungselement 24 im Vergleich zum Versteifungselement 22 eine verschiedenartige Ausgestaltung aufweist, insbesondere in Bezug auf Zusatzfunktionen des weiteren Versteifungselements 24, wie beispielsweise eine Leitung eines Fluids, einen Wärmetransport o. dgl.

Bevorzugt sind die Pumpeneinheiten 14 jeweils mit einem Ende 26 am Grundelement 16 fixiert und mit einem weiteren Ende 28 am Versteifungselement 22 und/oder am weiteren Versteifungselement 24. Die Pumpeneinheiten 14 sind vorzugsweise räumlich zwischen dem Grundelement 16 und dem Versteifungselement 22 und/oder dem weiteren Versteifungselement 24 angeordnet, insbesondere betrachtet entlang einer sich zumindest im Wesentlichen senkrecht zu einer Haupterstreckungsebene 34 des Grundelements 16 verlaufenden Richtung. Das Versteifungselement 22 weist vorzugsweise eine Haupterstreckungsebene 30 auf, die sich zumindest im Wesentlichen parallel zur Haupterstreckungsebene 34 des Grundelements 16 erstreckt. Das weitere Versteifungselement 24 weist bevorzugt eine Haupterstreckungsebene 32 auf, die sich zumindest im Wesentlichen parallel zur Haupterstreckungsebene 34 des Grundelements 16 erstreckt. Vorzugsweise erstreckt sich das Versteifungselement 22, betrachtet entlang einer zumindest im Wesentlichen parallel zur Haupterstreckungsebene 34 des Grundelements 16 verlaufenden Richtung 36, zumindest über zwei Pumpeneinheiten 14, insbesondere über alle Pumpeneinheiten 14, der Vielzahl der Pumpeneinheiten 14 und liegt an diesen, insbesondere direkt, an. Bevorzugt erstreckt sich das weitere Versteifungselement 24, betrachtet entlang der zumindest im Wesentlichen parallel zur Haupterstreckungsebene 34 des Grundelements 16 verlaufenden Richtung 36, zumindest über zwei Pumpeneinheiten 14, insbesondere über alle Pumpeneinheiten 14, der Vielzahl der Pumpeneinheiten 14 und liegt an diesen, insbesondere direkt, an. Das Versteifungselement 22 und das weitere Versteifungselement 24 sind vorzugsweise nebeneinander an den Pumpeneinheiten 14 angeordnet, insbesondere daran fixiert, wobei sich das Versteifungselement 22 und das weitere Versteifungselement 24 entlang der Richtung 36 über die Pumpeneinheiten 14 erstrecken. Die Pumpeneinheiten 14 sind vorzugsweise zusammen mit dem Versteifungselement 22 und mit dem weiteren Versteifungselement 24 sowie mit dem Grundelement 16 als Ganzes modular austauschbar ausgebildet, insbesondere als Ganzes von der Gestelleinheit 12 abnehmbar ausgebildet.

Das Versteifungselement 22 und/oder das weitere Versteifungselement 24 können/kann als Versteifungsbalken, als Versteifungsplatte, als Versteifungsrohr, als Versteifungsbolzen, als Versteifungsstab oder als ein anderes, einem Fachmann als sinnvoll erscheinendes Bauteil ausgebildet sein, das die Pumpeneinheiten 14 zumindest im Wesentlichen starr miteinander verbindet. Das Versteifungselement 22 und das weitere Versteifungselement 24 sind in dem hier dargestellten Ausführungsbeispiel bevorzugt als CIP-Balken ausgebildet. Das Versteifungselement 22 und das weitere Versteifungselement 24 weisen vorzugsweise jeweils eine, insbesondere integrierte, Fluidleitung 20, 38 zu einer Ab- oder Zuführung eines Fluids zu den Pumpeneinheiten 14 auf. Das Versteifungselement 22 und/oder das weitere Versteifungselement 24 umfassen/umfasst zumindest die Fluidleitung 20, 38, die zu einem Führen, insbesondere Ableiten, eines zu einer CIP-Reinigung der Pumpeneinheiten 14 vorgesehenen CIP-Reinigungsmediums vorgesehen ist. Die Dosiervorrichtung 10 umfasst vorzugsweise zumindest eine Reinigungszuführleitung 66, über das CIP-Reinigungsmedium zu den Pumpeneinheiten 14 zuführbar ist (vgl. Figur 2). Die Reinigungszuführleitung 66 ist bevorzugt in einem relativ zum Grundelement 16 beweglich gelagerten Kopplungselement 68 angeordnet, insbesondere darin integriert (vgl. Figur 2). Das Kopplungselement 68 ist vorzugsweise als Spülbalken ausgebildet, der mittels eines Motors 70 der Dosiervorrichtung 10 aktiv relativ zum Grundelement 16 beweglich ist. Das Kopplungselement 68 umfasst vorzugsweise eine Vielzahl an Kopplungsöffnungen (hier nicht näher dargestellt). Eine Anzahl an Kopplungsöffnungen ist bevorzugt abhängig von der Anzahl an Pumpeneinheiten 14, insbesondere von der Anzahl an Pumpenaustragsdüsen 60. Die Kopplungsöffnungen sind vorzugsweise dazu vorgesehen, die Pumpenaustragsdüsen 60 in einer Reinigungsstellung des Kopplungselements 68 aufzunehmen. In der Reinigungsstellung des Kopplungselements 68 wird das Reinigungsmedium vorzugsweise über die Pumpenaustragsdüsen 60 in die Pumpeneinheiten 14 eingeführt und über die Fluidleitung 20 des Versteifungselements 22 und/oder über die Fluidleitung 38 des weiteren Versteifungselements 24 abgeführt.

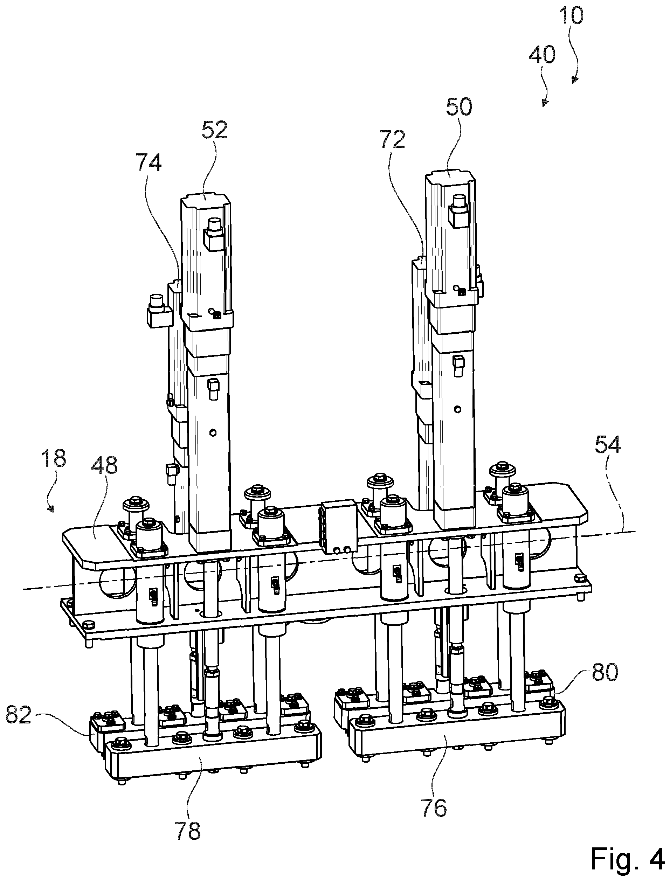

Des Weiteren umfasst die Dosiervorrichtung 10 zumindest eine Antriebseinheit 40 (vgl. Figuren 2 und 4), die an einem Basisgestell 42 der Gestelleinheit 12 angeordnet ist, wobei das Basisgestell 42 an dem Grundelement 16 fixiert ist und die Pumpeneinheit 14 zumindest an einem Ende 28, insbesondere an dem weiteren Ende 28, an dem das Versteifungselement 22 und/oder das weitere Versteifungselement 24 an den Pumpeneinheiten 14 angeordnet sind/ist, starrverbindungsfrei zwischen zwei Seitenwandelementen 44, 46 des Basisgestells 42 angeordnet ist (vgl. Figur 2). Vorzugsweise sind die Pumpeneinheiten 14 an den weiteren Enden 28 frei von einer direkten Verbindung mit den Seitenwandelementen 44, 46. Bevorzugt sind/ist das Versteifungselement 22 und/oder das weitere Versteifungselement 24 starrverbindungsfrei zwischen den zwei Seitenwandelementen 44, 46 des Basisgestells 42 angeordnet, insbesondere betrachtet entlang der zumindest im Wesentlichen parallel zur Haupterstreckungsebene 34 des Grundelements 16 verlaufenden Richtung 36. Vorzugsweise sind/ist das Versteifungselement 22 und/oder das weitere Versteifungselement 24 frei von einer direkten Verbindung mit den Seitenwandelementen 44, 46. Die Pumpeneinheiten 14 sowie das Versteifungselement 22 und/oder das weitere Versteifungselement 24 sind vorzugsweise räumlich zwischen dem Grundelement 16 und der Antriebseinheit 40 angeordnet, insbesondere betrachtet entlang der zumindest im Wesentlichen senkrecht zur Haupterstreckungsebene 34 des Grundelements 16 verlaufenden Richtung.

Figur 4 zeigt die Antriebseinheit 40 in einem von der Gestelleinheit 12 demontierten Zustand. Die Antriebseinheit 40 umfasst vorzugsweise eine Vielzahl an Antrieben 50, 52, 72, 74 zu einem Antrieb der Pumpeneinheiten 14. Die Antriebe 50, 52, 72, 74 können als elektrische Antriebe, als hydraulische Antriebe, als pneumatische Antriebe oder als sonstige, einem Fachmann als sinnvoll erscheinende Antriebe ausgebildet sein. In dem in den Figuren dargestellten Ausführungsbeispiel umfasst die Antriebseinheit 40 vier Antriebe 50, 52, 72, 74, wobei zwei Antriebe 50, 52 zu einem Kolbenantrieb der Pumpeneinheiten 14 vorgesehen sind und zwei Antriebe 72, 74 zu einem Ventilantrieb der Pumpeneinheiten 14 vorgesehen sind. Es ist jedoch auch denkbar, dass die Antriebseinheit 40 pro Kolben der Pumpeneinheiten 14 und pro Ventil der Pumpeneinheiten 14 jeweils einen Einzelantrieb umfasst. Die Antriebseinheit 40 umfasst vorzugsweise pro Antrieb 50, 52, 72, 74 ein Kupplungselement 76, 78, 80, 82, wobei das jeweilige Kupplungselement 76, 78, 80, 82 vier Antriebselemente, insbesondere Antriebswellen, der Pumpeneinheiten 14 miteinander verbindet. Bevorzugt sind vier Kolbenantriebswellen der Pumpeneinheiten 14 pro Antrieb 50, 52 und vier Ventilantriebswellen der Pumpeneinheiten 14 pro Antrieb 72, 74 über jeweils eines der Kupplungselemente 76, 78, 80, 82 antriebstechnisch miteinander verbunden (vgl. Figuren 2 und 4). Es ist jedoch auch denkbar, dass pro Kolbenantriebswelle und pro Ventilantriebswelle ein Einzelantrieb der Antriebseinheit 40 vorgesehen ist, um einen Einzelantrieb der jeweiligen Kolbenantriebswelle und der jeweiligen Ventilantriebswelle zu realisieren.

Die Versteifungseinheit 18 umfasst bevorzugt zumindest ein biegesteifes, insbesondere Doppel-T-Träger-förmiges, Antriebsversteifungselement 48, an dem die Antriebseinheit 40, insbesondere die Antriebe 50, 52, 72, 74 der Antriebseinheit 40, angeordnet ist/sind, insbesondere fixiert ist/sind, wobei das, insbesondere zumindest eine im Wesentlichen parallel zur Haupterstreckungsebene 30, 32 des Versteifungselements 22 und/oder des weiteren Versteifungselements 24 verlaufende Längsachse 54 aufweisende, Antriebsversteifungselement 48 mit den Seitenwandelementen 44, 46 zumindest im Wesentlichen starr verbunden ist. Das Antriebsversteifungselement 48 ist vorzugsweise an einer dem Grundelement 16 abgewandten Seite der Seitenwandelemente 44, 46 an den Seitenwandelementen 44, 46 angeordnet, insbesondere daran fixiert. Das Antriebsversteifungselement 48 ist vorzugsweise zusammen mit der Antriebseinheit 40 als Ganzes modular austauschbar an den Seitenwandelementen 44, 46 angeordnet, insbesondere daran fixiert. Vorzugsweise sind die Antriebe 50, 52 zu einem Antrieb der Kolbenantriebswellen an einem Oberflansch des Antriebsversteifungselements 48 angeordnet, insbesondere daran fixiert. Bevorzugt sind die Antriebe 72, 74 zu einem Antrieb der Ventilantriebswellen an einem Unterflansch des Antriebsversteifungselements 48 angeordnet, insbesondere daran fixiert. Es ist jedoch auch denkbar, dass alle Antriebe 50, 52, 72, 74 am Oberflansch oder am Unterflansch des Antriebsversteifungselements 48 angeordnet sind, insbesondere daran fixiert sind, oder dass die Antriebe 50, 52 zum Antrieb der Kolbenantriebswellen am Unterflansch angeordnet sind, insbesondere daran fixiert sind, während die Antriebe 72, 74 zum Antrieb der Ventilantriebswellen am Oberflansch angeordnet sind, insbesondere daran fixiert sind. Bevorzugt erstrecken sich die Ventilantriebswellen in einem an den Pumpeneinheiten 14 angeordneten Zustand des Versteifungselements 22 durch das Versteifungselement 22 hindurch, insbesondere betrachtet entlang der zumindest im Wesentlichen senkrecht zur Haupterstreckungsebene 34 des Grundelements 16 verlaufenden Richtung. Vorzugsweise erstrecken sich die Kolbenantriebswellen in einem an den Pumpeneinheiten 14 angeordneten Zustand des weiteren Versteifungselements 24 durch das weitere Versteifungselement 24 hindurch, insbesondere betrachtet entlang der zumindest im Wesentlichen senkrecht zur Haupterstreckungsebene 34 des Grundelements 16 verlaufenden Richtung. Weitere, einem Fachmann als sinnvoll erscheinende Ausgestaltungen und/oder Anordnungen der Antriebseinheit 40 am Antriebsversteifungselement 48 sind ebenfalls denkbar.

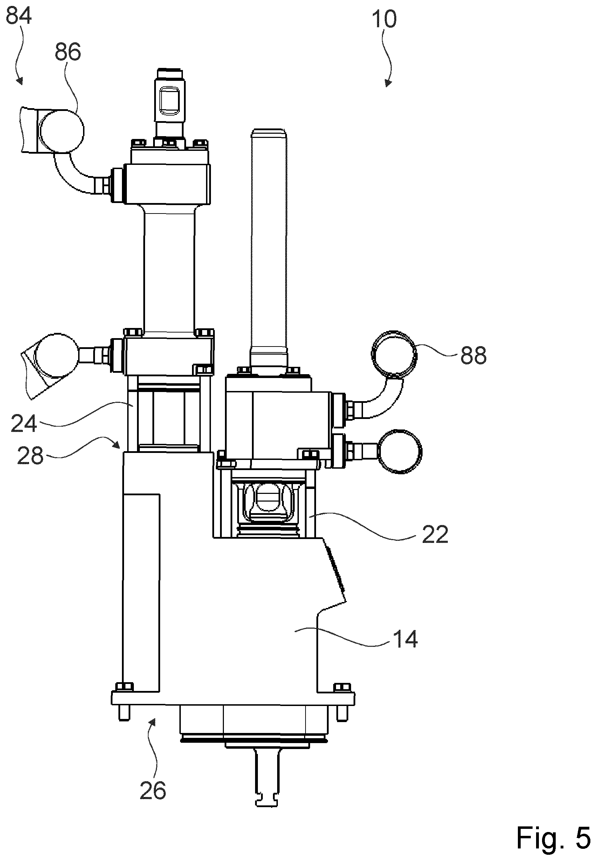

Figur 5 zeigt eine, insbesondere optional, an den Pumpeneinheiten 14 anordenbare Sterilfluidverteilereinheit 84. Die Sterilfluidverteilereinheit 84 kann vorzugsweise optional an den Pumpeneinheiten 14, insbesondere in Abhängigkeit von einem Einsatzgebiet der Dosiervorrichtung 10, vorgesehen sein, insbesondere nachgerüstet werden. Die Sterilfluidverteilereinheit 84 ist bevorzugt räumlich zwischen dem Antriebsversteifungselement 48 sowie dem Versteifungselement 22 und/oder dem weiteren Versteifungselement 24 an den Pumpeneinheiten 14 anordenbar, insbesondere betrachtet entlang der zumindest im Wesentlichen senkrecht zur Haupterstreckungsebene 34 des Grundelements 16 verlaufenden Richtung. Die Sterilfluidverteilereinheit 84 ist vorzugsweise zu einer Führung, insbesondere zu einer Zuleitung, von Sterilluft zu den Pumpeneinheiten 14 vorgesehen. Bevorzugt umfasst die Sterilfluidverteilereinheit 84 eine den Kolbenantriebswellen zugeordnete Sterilluftverteilerleitung 86. Die Kolbenantriebswellen erstrecken sich vorzugsweise durch die den Kolbenantriebswellen zugeordnete Sterilluftverteilerleitung 86 hindurch. Vorzugsweise sind auf eine, einem Fachmann bereits bekannte Art und Weise Dichtungselemente im Bereich der Kolbenantriebswellen angeordnet. Bevorzugt umfasst die Sterilfluidverteilereinheit 84 eine den Ventilantriebswellen zugeordnete Sterilluftverteilerleitung 88. Die Ventilantriebswellen erstrecken sich vorzugsweise durch die den Ventilantriebswellen zugeordnete Sterilluftverteilerleitung 88 hindurch. Vorzugsweise sind auf eine, einem Fachmann bereits bekannte Art und Weise Dichtungselemente im Bereich der Ventilantriebswellen angeordnet.

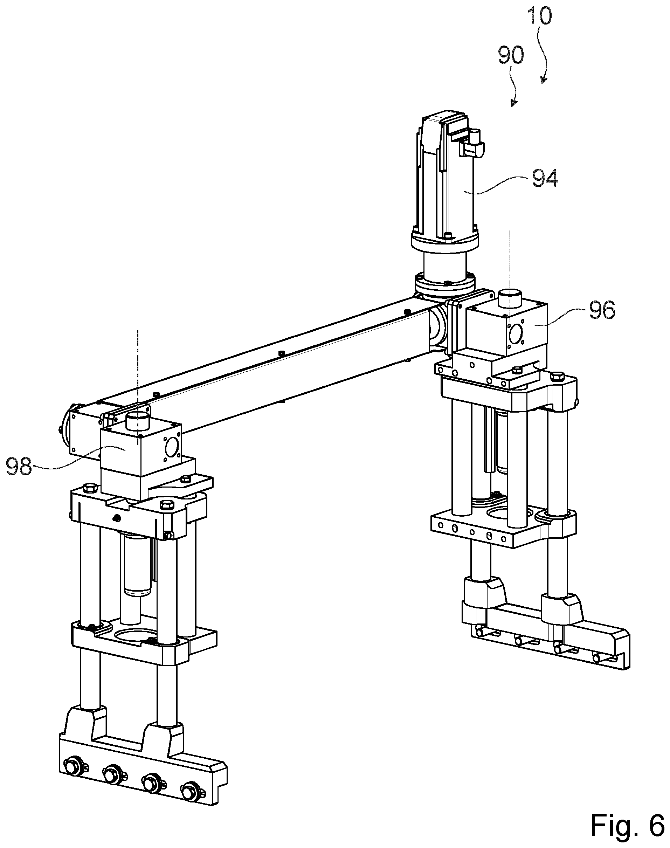

Figur 6 zeigt eine, insbesondere optional, an der Gestelleinheit 12 anordenbare Hubeinheit 90. Die Hubeinheit 90 kann vorzugsweise optional, insbesondere in Abhängigkeit von einem Einsatzgebiet der Dosiervorrichtung 10, vorgesehen sein, insbesondere nachgerüstet werden. Die Hubeinheit 90 ist vorzugsweise an den Seitenwandelementen 44, 46 anordenbar, insbesondere daran fixiert (vgl. Figur 2). Die Hubeinheit 90 ist bevorzugt mit einem den Pumpeneinheiten 14 abgewandten Ende an einem Grundrahmenelement 92 der Gestelleinheit 12 anordenbar, insbesondere daran fixiert. Das Grundrahmenelement 92 umgibt das Grundelement 16, insbesondere betrachtet in der Haupterstreckungsebene 34 des Grundelements 16, insbesondere vollständig. Eine Relativposition, insbesondere entlang der zumindest im Wesentlichen senkrecht zur Haupterstreckungsebene 34 des Grundelements 16 verlaufenden Richtung, des Grundelements 16 relativ zum Grundrahmenelement 92 ist mittels der Hubeinheit 90 aktiv änderbar. Die Hubeinheit 90 umfasst vorzugsweise einen Hubmotor 94, der dazu vorgesehen ist, insbesondere über eine Synchronwelle der Hubeinheit 90 zwei Linearzylinder 96, 98 anzutreiben, insbesondere um eine Relativposition des Grundelements 16 aktiv zu ändern. Insbesondere ist es denkbar, dass bei einer Ausstattung der Dosiervorrichtung 10 mit unterschiedlichen Antriebseinheiten 40 und/oder Pumpeneinheiten 14 eine Relativposition des Grundelements 16 änderbar ist, um die Antriebseinheiten 40 und/oder Pumpeneinheiten 14 entsprechend an der Gestelleinheit 12 anzuordnen. Die Dosiervorrichtung 10 ist vorzugsweise mittels des Grundrahmenelements 92 an einem Maschinenrahmen der Produktionsmaschine 56 angeordnet, insbesondere daran fixiert. Alternativ zur Hubeinheit 90 kann die Dosiervorrichtung 10 auch eine unverstellbare Trägereinheit (hier nicht näher dargestellt) aufweisen, die die Seitenwandelemente 44, 46, mit dem Grundrahmenelement 92 verbindet, insbesondere unverstellbar daran fixiert. Weitere, einem Fachmann als sinnvoll erscheinende Ausgestaltungen der Dosiervorrichtung 10 mit zusätzlichen oder alternativen Einheiten und/oder Elementen, die für einen Einsatzgebiet der Dosiervorrichtung 10 sinnvoll sind, sind ebenfalls denkbar.

## Patentansprüche

1. Dosiervorrichtung zu einem Dosieren von flüssigen oder pastösen Produkten, insbesondere Lebensmitteln, mit zumindest einer Gestelleinheit (12) und mit einer Vielzahl an Pumpeneinheiten (14) zu einer Förderung der flüssigen oder pastösen Produkte, wobei die Pumpeneinheiten (14) an einem, insbesondere plattenförmigen, Grundelement (16), insbesondere an einer Formatplatte, der Gestelleinheit (12) angeordnet sind, insbesondere daran fixiert sind, und mit zumindest einer Versteifungseinheit (18), die zumindest ein Versteifungselement (22, 24) umfasst, das die Pumpeneinheiten (14) zumindest im Wesentlichen starr miteinander verbindet, wobei das Versteifungselement (22, 24) auf einer dem Grundelement (16) und/oder Pumpenaustragsdüsen (60) der Pumpeneinheiten (14) abgewandten Seite der Pumpeneinheiten (14) an den Pumpeneinheiten (14) angeordnet ist, **dadurch gekennzeichnet, dass** das Versteifungselement (22, 24) zumindest eine Fluidleitung (20, 38) umfasst, die zu einem Führen, insbesondere Ableiten, eines zu einer CIP-Reinigung der Pumpeneinheiten (14) vorgesehenen CIP-Reinigungsmediums vorgesehen ist.

2. Dosiervorrichtung nach Anspruch 1, **dadurch gekennzeichnet, dass** die Pumpeneinheiten (14) jeweils mit einem Ende (26) am Grundelement (16) fixiert sind und mit einem weiteren Ende (28) am Versteifungselement (22, 24) fixiert sind.

3. Dosiervorrichtung nach Anspruch 1 oder 2, **dadurch gekennzeichnet, dass** das Versteifungselement (22, 24) eine Haupterstreckungsebene (30, 32) aufweist, die sich zumindest im Wesentlichen parallel zu einer Haupterstreckungsebene (34) des Grundelements (16) erstreckt.

4. Dosiervorrichtung nach einem der vorhergehenden Ansprüche, **dadurch gekennzeichnet, dass** sich das Versteifungselement (22, 24), betrachtet entlang einer zumindest im Wesentlichen parallel zu einer Haupterstreckungsebene (34) des Grundelements (16) verlaufenden Richtung (36), zumindest über zwei Pumpeneinheiten (14), insbesondere über alle Pumpeneinheiten (14), der Vielzahl der Pumpeneinheiten (14) erstreckt und an diesen, insbesondere direkt, anliegt.

5. Dosiervorrichtung nach einem der vorhergehenden Ansprüche, **dadurch gekennzeichnet, dass** die Versteifungseinheit (18) zumindest ein, insbesondere zumindest eine Fluidleitung (20, 38) aufweisendes, weiteres Versteifungselement (22, 24) umfasst, das die Pumpeneinheiten (14) zumindest im Wesentlichen starr miteinander verbindet.

6. Dosiervorrichtung nach einem der vorhergehenden Ansprüche, **dadurch gekennzeichnet, dass** die Pumpeneinheiten (14) zusammen mit dem Versteifungselement (22, 24) und mit dem Grundelement (16) als Ganzes modular austauschbar ausgebildet sind.

7. Dosiervorrichtung nach einem der vorhergehenden Ansprüche, **gekennzeichnet durch** zumindest eine Antriebseinheit (40), die an einem Basisgestell (42) der Gestelleinheit (12) angeordnet ist, wobei das Basisgestell (42) an dem Grundelement (16) fixiert ist und die Pumpeneinheit (14) zumindest an einem Ende (28), insbesondere an einem Ende (28), an dem das Versteifungselement (22, 24) an den Pumpeneinheiten (14) angeordnet ist, starrverbindungsfrei zwischen zwei Seitenwandelementen (44, 46) des Basisgestells (42) angeordnet ist.

8. Dosiervorrichtung zumindest nach Anspruch 7, insbesondere nach einem der vorhergehenden Ansprüche, **dadurch gekennzeichnet, dass** die Versteifungseinheit (18) zumindest ein biegesteifes, insbesondere Doppel-T-Träger-förmiges, Antriebsversteifungselement (48) umfasst, an dem die Antriebseinheit (40), insbesondere eine Vielzahl an Antrieben (50, 52, 72, 74) der Antriebseinheit (40), angeordnet ist, insbesondere fixiert ist, wobei das, insbesondere zumindest eine im Wesentlichen parallel zu einer Haupterstreckungsebene (30, 32) des Versteifungselements (22, 24) verlaufende Längsachse (54) aufweisende, Antriebsversteifungselement (48) mit den Seitenwandelementen (44, 46) zumindest im Wesentlichen starr verbunden ist.

9. Produktionsmaschine mit zumindest einer Dosiervorrichtung nach einem der vorhergehenden Ansprüche.

## Claims

1. Metering device for a metering of liquid or pasty products, in particular food products, with at least one frame unit (12) and with a plurality of pump units (14) for conveying the liquid or pasty products, the pump units (14) being arranged, in particular fixed, on an, in particular plate-shaped, base element (16), in particular on a format plate, of the frame unit (12), and with at least one stiffening unit (18) comprising at least one stiffening element (22, 24) which connects the pump units (14) to one another in an at least substantially rigid manner, the stiffening element (22, 24) being arranged at the pump units (14) on a side of the pump units (14) that faces away from the base element (16) and/or from pump discharge nozzles (60) of the pump units (14), **characterized in that** the stiffening element (22, 24) comprises at least one fluid line (20, 38) which is configured for a conveying, in particular a discharging, of a CIP cleaning medium provided for a CIP cleaning of the pump units (14).

2. Metering device according to claim 1, **characterized in that** the pump units (14) are in each case fixed to the base element (16) with one end (26) and are fixed to the stiffening element (22, 24) with a further end (28).

3. Metering device according to claim 1 or 2, **characterized in that** the stiffening element (22, 24) has a main extension plane (30, 32) which extends at least substantially parallel to a main extension plane (34) of the base element (16).

4. Metering device according to any one of the preceding claims, **characterized in that** viewed along a direction (36) that runs at least substantially parallel to a main extension plane (34) of the base element (16), the stiffening element (22, 24) extends at least over two pump units (14), in particular over all pump units (14), of the plurality of pump units (14) and bears against them, in particular directly.

5. Metering device according to any one of the preceding claims, **characterized in that** the stiffening unit (18) comprises at least one further stiffening element (22, 24), which in particular has at least one fluid line (20, 38) and which connects the pump units (14) to one another in an at least substantially rigid manner.

6. Metering device according to any one of the preceding claims, **characterized in that** together with the stiffening element (22, 24) and with the base element (16) the pump units (14) are realized such that they are module-wise exchangeable as a whole.

7. Metering device according to any one of the preceding claims, **characterized by** at least one drive unit (40) which is arranged on a base frame (42) of the frame unit (12), wherein the base frame (42) is fixed to the base element (16) and the pump unit (14) is arranged, without a rigid connection, between two side wall elements (44, 46) of the base frame (42) at least at one end (28), in particular at an end (28) with which the stiffening element (22, 24) is arranged at the pump units (14).

8. Metering device at least according to claim 7, in particular according to any one of the preceding claims, **characterized in that** the stiffening unit (18) comprises at least one flexurally rigid, in particular double-T-beam-shaped, drive stiffening element (48) on which the drive unit (40), in particular a plurality of drives (50, 52, 72, 74) of the drive unit (40), is arranged, in particular fixed, wherein the drive stiffening element (48), which in particular has at least one longitudinal axis (54) that extends substantially parallel to a main extension plane (30, 32) of the stiffening element (22, 24), is connected to the side wall elements (44, 46) in an at least substantially rigid manner.

9. Production machine with at least one metering device according to any one of the preceding claims.

## Revendications

1. Dispositif de dosage pour le dosage de produits liquides ou pâteux, en particulier de denrées alimentaires, avec au moins une unité de bâti (12) et avec une pluralité d'unités de pompe (14) pour un transport des produits liquides ou pâteux, où les unités de pompe (14) sont disposées sur un élément de base (16), en particulier en forme de plaque, en particulier sur une plaque de format, de l'unité de bâti (12), en particulier sont fixées à celle-ci, et avec au moins une unité de renforcement (18) qui comprend au moins un élément de renforcement (22, 24) qui relie les unités de pompe (14) entre elles au moins sensiblement de manière rigide, où l'élément de renforcement (22, 24) est disposé sur les unités de pompe (14) sur un côté des unités de pompe (14) opposé à l'élément de base (16) et/ou aux buses de décharge de pompe (60) des unités de pompe (14), **caractérisé en ce que** l'élément de renforcement (22, 24) comprend au moins une conduite de fluide (20, 38) qui est prévue pour un guidage, en particulier une évacuation, d'un milieu de nettoyage CIP prévu pour un nettoyage CIP des unités de pompe (14).

2. Dispositif de dosage selon la revendication 1, **caractérisé en ce que** les unités de pompe (14) sont fixées chacune par une extrémité (26) à l'élément de base (16) et par une autre extrémité (28) à l'élément de renforcement (22, 24).

3. Dispositif de dosage selon la revendication 1 ou 2, **caractérisé en ce que** l'élément de renforcement (22, 24) présente un plan d'extension principal (30, 32) qui s'étend au moins sensiblement parallèlement à un plan d'extension principal (34) de l'élément de base (16).

4. Dispositif de dosage selon l'une quelconque des revendications précédentes, **caractérisé en ce que** l'élément de renforcement (22, 24), vu le long d'une direction (36) s'étendant au moins sensiblement parallèlement à un plan d'extension principal (34) de l'élément de base (16), s'étend au moins sur deux unités de pompe (14), en particulier sur toutes les unités de pompe (14), de la pluralité d'unités de pompe (14) et s'appuie sur celles-ci, en particulier directement.

5. Dispositif de dosage selon l'une quelconque des revendications précédentes, **caractérisé en ce que** l'unité de renforcement (18) comprend au moins un autre élément de renforcement (22, 24), présentant en particulier au moins une conduite de fluide (20, 38), qui relie les unités de pompe (14) entre elles au moins sensiblement de manière rigide.

6. Dispositif de dosage selon l'une quelconque des revendications précédentes, **caractérisé en ce que** les unités de pompe (14) sont réalisées de manière interchangeable de manière modulaire dans l'ensemble avec l'élément de renforcement (22, 24) et avec l'élément de base (16).

7. Dispositif de dosage selon l'une quelconque des revendications précédentes, **caractérisé par** au moins une unité d'entraînement (40) qui est disposée sur un bâti de base (42) de l'unité de bâti (12), où le bâti de base (42) est fixé à l'élément de base (16) et l'unité de pompe (14) est disposée au moins à une extrémité (28), en particulier à une extrémité (28) à laquelle l'élément de renforcement (22, 24) est disposé sur les unités de pompe (14), sans liaison rigide entre deux éléments de paroi latérale (44, 46) du bâti de base (42).

8. Dispositif de dosage au moins selon la revendication 7, en particulier selon l'une quelconque des revendications précédentes, **caractérisé en ce que** l'unité de renforcement (18) comprend au moins un élément de renforcement d'entraînement (48) rigide en flexion, en particulier en forme de support en double T, sur lequel l'unité d'entraînement (40), en particulier une pluralité d'entraînements (50, 52, 72, 74) de l'unité d'entraînement (40), est disposée, en particulier est fixée, où l'élément de renforcement d'entraînement (48), présentant en particulier au moins un axe longitudinal (54) s'étendant sensiblement parallèlement à un plan d'extension principal (30, 32) de l'élément de renforcement (22, 24), est relié au moins sensiblement de manière rigide aux éléments de paroi latérale (44, 46).

9. Machine de production avec au moins un dispositif de dosage selon l'une quelconque des revendications précédentes.
